# EUROPEAN PATENT APPLICATION

(11) **EP 1 603 132 A2**
(43) Date of publication of application: **07.12.2005**
(21) Application number: 04021367.0
(22) Date of filing: 08.09.2004
(51) Int. Cl.: G11B 23/40, G11B 7/0045

(54) **Optical disc label recording method and apparatus using this method**

(30) Priority: 28.05.2004 JP 2004160183
(71) Applicant: KABUSHIKI KAISHA TOSHIBA, Tokyo 105-8001 (JP)
(72) Inventor: Nakane, Hiroshi, Intel. Property Division, Tokyo 105-8001 (JP); Hayashi, Yasuhiro, Intel. Property Division, Tokyo 105-8001 (JP)
(74) Representative: Henkel, Feiler & Hänzel

(57) **Abstract**

A label position (a position where a picture/character such as "A" or the like is recorded) where a label is to be recorded is determined (step ST12). Information of digital contents is recorded by a normal method at a position other than the label position on the information recording surface of a disc (ST16). On the other hand, information of the label (picture/character pattern information such as "A" or the like) is recorded at the label position on the information recording surface of the disc by modulating that information such that its visual pattern is different from that at a position other than the label position. Also, the information of the digital contents is recorded together in this label position (ST22).

## Description

The present invention relates to a method of recording a label or the like on an information surface of an optical disc, and an apparatus using this method.

In recent years, recordable/reproducible optical discs have been prevalently used as removable large-capacity information recording media. As practical examples of such optical discs, a CD-R/RW and DVD-R/RW/RAM (next generation optical disc using a blue laser in the future) are available. Also, apparatuses (personal computer, video recorder, and the like) using such optical disc have prevailed.

Upon selling recordable/reproducible optical discs as raw discs, they have no labels or pictures associated with individual recording contents. Before or after each disc undergoes recording (video recording), the user normally describes a label (picture and characters) and the like associated with recording contents on one surface (non-information recording surface) of that disc by handwriting or using a label printer.

In recent years, recordable/reproducible optical discs that can record pictures/characters without user's handwriting or any label printer have been developed. There are two types of such optical discs. One optical disc records pictures/characters using a laser on a label surface (e.g., "lightScribe(R)" developed by Hewlett-Packard Development Company), and the other optical disc records pictures/characters on an information recording surface.

As an example of "recording pictures/characters on the information recording surface, the following information published on the Internet is available:

"Print drawing technique on disc by CD-R/RW drive have been developed", [online], February 21, 2002, YAMAHA CORPORATION Public Relations Department, Internet <URL:
http://www.yamaha.co.jp/news/2002/02021501.html>

This information published on the Internet corresponds to Jpn. Pat. Appln. KOKAI Publication No. 2004-5848 filed January 8, 2004.

With the former technique that "records pictures/characters on the label surface by a laser", however, when an optical disc has a single-plate disc structure like a CD-R/RW, and the distance from the substrate surface to the information recording surface on the label surface side is largely different from that on the information recording surface side, if a laser pickup for information recording is commonly used to record pictures/characters, a broad focus movable range must be assured. When another laser head dedicated to record pictures/characters is arranged to avoid the above problem, cost increases.

With the latter technique that "records pictures/characters on the information recording surface" (published on the Internet), since a.normal laser pickup for information recording can be directly used to record pictures/characters, the problem of an increase in cost in the pickup can be avoided.

Since the method based on the information published on the Internet (or Jpn. Pat. Appln. KOKAI Publication No. 2004-5848) records pictures/characters (memo of recording contents, logo, illustration, and the like) using a non-recording portion of a disc, a label recording area must be left on the information recording surface of the disc. This means a decrease in disc storage capacity since it is used to record a label.

The present invention has been made in consideration of the above situation, and has as its one object to provide a recording method which can record label information on an information recording surface of a disc while preventing a decrease in storage capacity of the disc due to label recording, and an apparatus using this method.

A recording method according to an embodiment of the present invention records digital contents and a label using an optical disc having a recordable/reproducible information recording surface. In this recording method, a label position where the label is to be recorded (a position where a picture/character such as "A" or the like is to be recorded) is determined (step ST12). Of the information recording surface of the optical disc, the digital contents information (digital video contents, computer data, or the like) is recorded by a normal method except for the label position (step ST16). On the other hand, at the label position on the information recording surface of the optical disc, information of the label (pattern information of a picture/character such as "A" or the like) is modulated and recorded so that its visual pattern is different from an area other than the label position, and the digital contents information is also recorded together in the label position (step ST22).

A modulation method used to record information at the label position makes the picture/character pattern of the recorded label appear visually different from a surrounding normal recording pattern. More specifically, a method of applying modulation of a duty ratio of around 50% may be adapted so that the DC component of a recording signal at the label position becomes nearly zero, and/or a method of setting the recording signal level (recording laser power) at the label position to be lower than that at a position other than the label position may be adopted.

Since the picture/character pattern is simultaneously recorded on a single.area where contents information is also recorded, it is not preferable that the presence of the picture/character pattern causes any error in recording/reproduction of contents information. For this reason, the picture/character pattern is inserted by modulating the laser pickup within a range in which code correction of contents information functions sufficiently. More specifically, a method of applying modulation may be used so that a picture/character pattern portion that may cause information omission of recording information becomes half or less' of the interleave length of code correction.

Since a picture/character pattern recording area of a label is assured in an area used in normal information recording, a label dedicated recording area need not be separately prepared.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view for explaining how to record a picture/character of a label on an optical disc according to an embodiment of the present invention;
FIG. 2 is a view for explaining the relationship between a picture/character to be recorded on the optical disc shown in FIG. 1, and a recording signal corresponding to this picture/character;
FIG. 3 is a flowchart for explaining an example of the processing sequence for recording normal information and a label picture/character on the optical disc shown in FIG. 1; and
FIG. 4 is a block diagram for explaining an example of the arrangement of a disc drive apparatus, which records normal information and a label picture/character on the optical disc shown in FIG. 1.

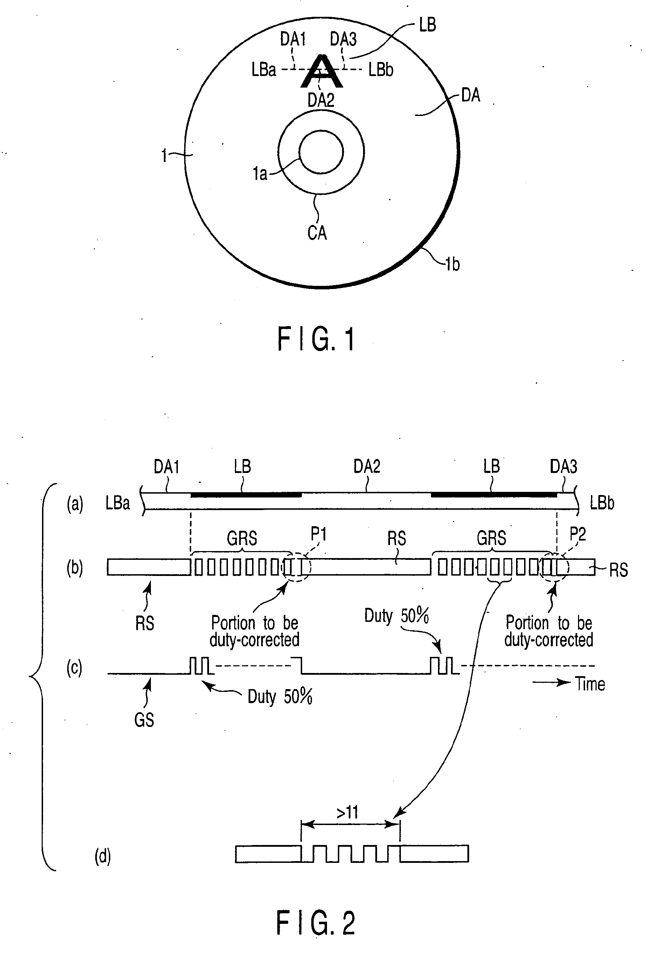

An embodiment of the present invention will be described hereinafter with reference to the accompanying drawings. FIG. 1 is a view for explaining how to record a picture/character of a label on an optical disc according to an embodiment of the present invention. As this optical disc 1, a CD-R/RW or DVD-R/RW/RAM of a single-sided/one recording layer type can be used. The following explanation will be given taking a DVD-RW of a single-sided/one recording layer type as a practical example (the same applies to a DVD-R except for a recording layer).

DVD-RW disc 1 in this example has inner diameter 1a of 15 mm and outer diameter 1b of 120 mm, and clamp area CA is formed on the inner diameter side. Information recording area DA is formed from the outer periphery (a radial position of 24 mm) toward outer diameter 1b (a radial position of 58 mm). In this area DA, a lead-in area is formed on the inner diameter 1a side, and a lead-out area is formed on the outer diameter 1b side. A spiral track is formed from the start end of the lead-in area to the terminal end of the lead-out area, and physical sectors are assigned on that track. With this physical sector number, a physical position on recording area DA of disc 1 can be specified. ECC block addresses are specified as absolute physical addresses of the track, and a physical position on recording area DA of disc 1 can also be specified by this ECC block address.

A position of recording area DA, where a density pattern of label character LB is to be formed by changing the modulation method of an information recording layer can be determined using the physical sector number and/or ECC block address.

FIG. 2 is a view for explaining a picture/character to be recorded on the optical disc shown in FIG. 1, and a recording signal corresponding to this picture/character. FIG. 2(a) shows a partial section of disc 1 taken along a line "LBa" - "LBb" in FIG. 1. FIG. 2(b) exemplifies recording signal RS on information recording areas DA1 to DA3 shown in FIG. 2(a), and recording signal GRS of label character LB formed between these signal portions. FIG. 2(c) exemplifies gate signal GS used to form recording signal GRS shown in FIG. 2(b).

In the example of FIG. 2, intermittent recording signal GRS is generated by chopping recording signal RS by gate signal GS with a duty ratio of 50% in label picture/character recording portions (LB portions in FIG. 2(a)). By recording on laser disc 1 by a laser corresponding to such intermittent recording signal GRS, information recording which have different visual appearance from recording portions by a laser corresponding to continuous recording signal RS is done on disc 1 (appearance changes depending on a status change of phase change in a DVD-RW; appearance changes depending on the degree of change in color of a dye in a DVD-R). A trace of "information recording with different visual appearance" forms label character LB (label character "A" in the example of FIG. 1) on information recording area DA of disc 1.

Even when recording signal RS is chopped to form intermittent recording signal RS, if information which is lost by formation of the intermittent signal falls within the effective range of error correction (ECC) effect, the original information recording capacity of the disc is never reduced upon recording a label character (for example, the storage capacity of a single-sided 4.7GB DVD-RW can be assured for 4.7GB even after label recording). This "effective range of error correction" can be realized by controlling to form each intermittent portion to be half or less the interleave length.

In the example of FIG. 2, if the duty ratio at the end of recording signal GRS does not become 50% (the pattern of original picture/character LB does not always end at the timing of the duty ratio of 50%), the end of gate signal GS is adjusted so that the duty ratio of that portion becomes 50%. (If the duty ratio cannot be adjusted to 50% by a single process, duty ratio adjustment is made in the second and subsequent processes.) In this way, control is always made so that the average value (DC component) of recording signal GRS becomes zero.

With this adjustment, when the DC component of recording signal GRS is averaged to be nearly zero as a whole, a label picture/character portion and normal recording portion have different appearances of a phase change recording layer of the DVD-RW (dye recording layer in a DVD-R). When the DC component is controlled to zero, the appearance of the density pattern of the picture/character portion suffers no unevenness. In this manner, seemly label character LB can be recorded on information recording area DA of disc 1.

In the above example, the average value (DC component) of recording signal GRS is controlled to zero. That is, since the appearance of the label character portion need only be different from that of the surrounding portion (since the density pattern of the label character can be visually confirmed), the average value of recording signal GRS need not always be zero. Hence, in place of controlling the DC component of recording signal GRS for label character recording to zero, their signal levels may be controlled to be smaller than recording signal RS for normal recording (at a level that allows to read recorded information in a reproduction mode).

As shown in FIG. 2(d), recording signal GRS, the DC component of which is controlled to zero in the label character recording portion, may undergo DC control, so that the period of the duty ratio of 50% is shorter than 11t (11 cycles). In this case, DC control can be accurate, and signal reproduction performance in the label character recording portion can be improved. A longer period assures better visibility. When the signal period of FIG. 2(d) is prolonged, the visibility of the density pattern of the label character recording portion can be improved. In this case, the duty ratio of recording signal GRS (or gate signal GS) need not always be 50% (a value around 50% is desirable).

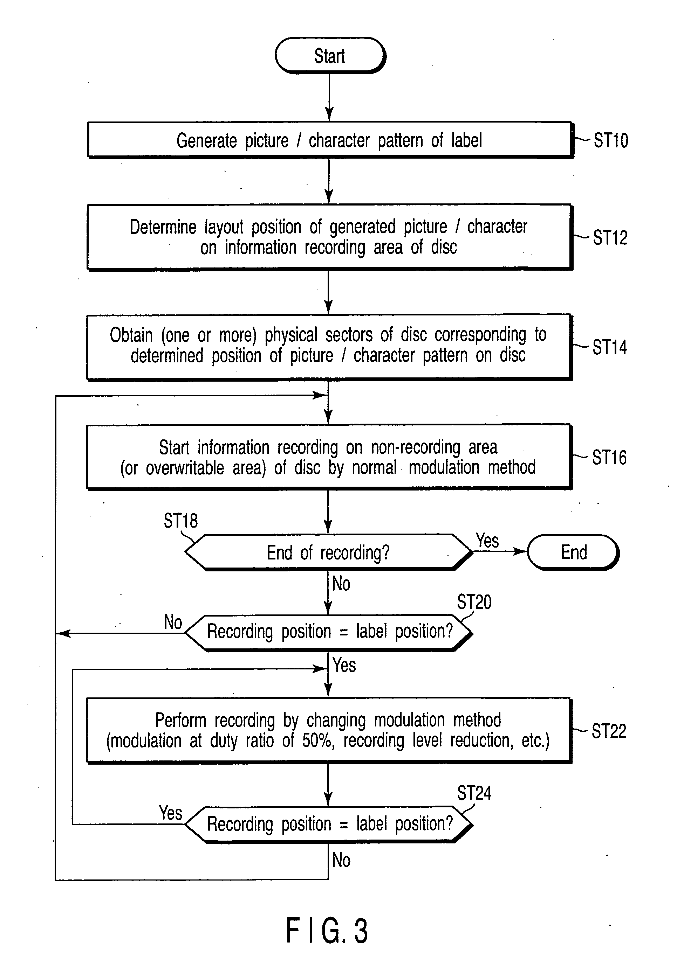

FIG. 3 is a flowchart for explaining an example of the processing sequence for recording normal information and a label picture/character on optical disc 1 shown in FIG. 1. In this process, digital contents and a label are recorded using optical disc (DVD-RW or the like) 1 having a recordable/reproducible information recording surface.

A label picture/character pattern is generated (step ST10). The label picture/character pattern can be generated using familiar drawing software in a personal computer, pattern generation software installed in firmware of a disc recorder, or a desired picture/character pattern scanned by a scanner.

After the desired picture/character pattern (bitmap data for a label, vector information of the picture/character pattern, or the like) is generated, the location of a label position, which is defined by a range (a rectangular range or a curved rectangular range obtained by clipping a portion of a doughnut shape in a fan shape) that surrounds the edges of the picture/character pattern, on disc 1 is determined (step ST12). This label position can be determined arbitrarily by the user or as a default by firmware that executes this process. Note that this label position is selected on a non-recording area (or overwritable area) of disc 1.

The physical sector numbers (or ECC block addresses) corresponding to the determined label position are obtained from the range of the label position (the determined location of the picture/character pattern on the disc) (step ST14). After the picture/character pattern to be recorded and its position on disc 1 are determined, information recording (of recording signal RS) starts on a non-recording area (or overwritable area) of disc 1 by a normal modulation method (step ST16). This information recording is repeated at a position other than the label position unless recording ends (NO in step ST18, NO in step ST20).

During information recording (NO in step ST18), if the recording position reaches the label position (the left end position of label character LB in the example of FIG. 2(a)) (YES in step ST20), the modulation method is changed to perform information recording which also records the label character (step ST22). More specifically, information recording is done using recording signal GRS generated by chopping recording signal RS by gate signal GS of a duty ratio of 50% (or recording signal RS whose signal level is set to be lower than that at a position other than the label position), as shown in FIG. 2(b). This recording continues while the recording position falls within the label position range (YES in step ST24).

If a recording laser beam has passed the label position (it has passed the right end position of label character LB in the example of FIG. 2(a)) (NO in step ST24), the control returns to recording by the normal modulation method (step ST16). The aforementioned processes (steps ST16 to ST24) are repeated until the end of recording (YES in step ST18). In this way, label character LB ("A" in the example of FIG. 1) which has a visual density pattern is recorded on recording area DA of disc 1 together with normal information.

In the process in step ST22, label information is modulated so that the duty ratio of the recording waveform becomes around 50% (the duty ratio at which the DC component becomes nearly zero). Such modulation is preferable since the recorded label character has a high contrast. Instead or in addition to the modulation method of the duty ratio of 50%, modulation at the label position may be set to be lower than that at a position other than the label position (e.g., the average laser output at the label position is set to be half that at a position other than the label position). With the method of appropriately reducing the signal level at the label position, a visual tone can be provided to the label picture/character pattern in correspondence with the degree of level reduction. Likewise, by varying the duty ratio at the label position around 50% (within the error-correctable range in a reproduction mode of recorded information), a slight tone can be produced.

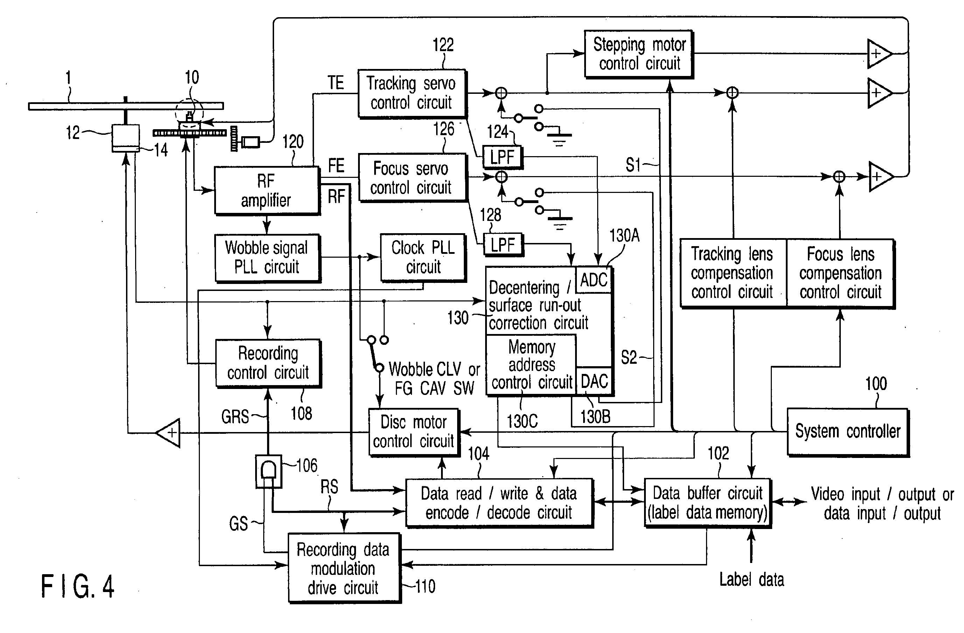

The process in step ST22 in FIG. 3 can be modified into three different processes. In the first process, label information ("A" in FIG. 1 or the like) is recorded at the label position on the information recording surface of optical disc 1 while being modulated within the error-correctable range, so that its visual pattern becomes different from that at a position other than the label position (using GRS in FIG. 2(b)). In this label position (within a label formation area), the digital contents information (signal components corresponding to a portion of GRS in FIG. 2(b)...components of recording signal RS that have passed AND gate 106 in the arrangement of FIG. 4) is also recorded together (step ST22).

In the second process, in a specific recording track (e.g., a track that crosses a character top portion of "A" in FIG. 1) in the label position on the information recording surface of optical disc 1, the label information is recorded. In a track that neighbors the specific recording track (e.g., a track that crosses a Δ portion in the character of "A" in FIG. 1...a DA2 portion in the example of FIGS. 1 and 2), the digital contents information is recorded. In this way, in the label position (in a label formation area), the label information and the digital contents information are recorded together (step ST22).

In the third process, in a specific sector in the label position (e.g., a sector at a position corresponding to LB on the left side in FIG. 2(b) of label character "A" in FIG. 1), the label information is recorded. In a sector that neighbors the specific sector (e.g., a sector at a position corresponding to DA2 at the center of FIG. 2(a)), the digital contents information is recorded. In this way, in the label position (in a label formation area), the label information and the digital contents information are recorded together (step ST22).

FIG. 4 is a block diagram for explaining an example of the arrangement of a disc drive device that records normal information and a label picture/character on optical disc 1 shown in FIG. 1. System controller 100 in FIG. 4 comprises an MPU, ROM, RAM, and the like, and a program that implements the process shown in the flowchart of FIG. 3 can be written as firmware in the ROM in controller 100.

In the arrangement of FIG. 4, contents data and label data to be recorded on disc 1 are input to data buffer circuit 102. The contents data output from circuit 102 is input to data read/write circuit & data encode/decode circuit 104. Circuit 104 outputs recording signal RS (see FIG. 2(b)) corresponding to contents information, and signal RS is sent to recording control circuit 108 via AND gate 106.

On the other hand, the label data output from circuit 102 is sent to recording data modulation drive circuit 110. The MPU in system controller 100 notifies circuit 110 of the recording position of the label data on disc 1 (by means of physical sector numbers or ECC block addresses). With this notification, circuit 110 inputs gate signal GS of a duty ratio of 50% to AND gate 106 at the timing shown in FIG. 2(c). As a result, AND gate 106 sends intermittent recording signal GRS which is modulated (chopped) by gate signal GS of the duty ratio of 50% to recording control circuit 108 at the timing of the recording position of label character LB, as shown in FIG. 2(b). A laser diode of laser pickup 10 is driven by recording signal RS (other than the label position) or recording signal GRS (label position) obtained in this way, thus recording information with the label character (picture/character pattern) on information recording area DA of disc 1.

In recording data modulation drive circuit 110, DCC control (DC component suppression control) that minimizes the absolute value of DSV (digital sum value) accumulated in an NRZI (non-return to zero inverted)-converted modulated channel bitstream may be made. When the control for setting the DC component of recording signal GRS to zero by modulating the signal at a duty ratio of 50%, the DCC control is preferably used together.

In the arrangement of FIG. 4, the output from rotary encoder 14 attached to spindle motor 12 is always sent to memory address control circuit 130C, and a sector of disc 1 currently traced by laser pickup 10 can be detected in real time. Upon detection of a sector corresponding to the label recording position on disc 1, memory address control circuit 130C sends it to a label data memory in data buffer circuit 102. In this way, circuit 102 can timely notify recording data modulation drive circuit 110 in real time that the label position is reached.

In the label position portion, data is intermitted (muted), as shown in FIG. 2(b). Hence, upon reproducing that portion, focus servo and tracking servo errors may occur (or servo may become unstable). To prevent such problem, the arrangement shown in FIG. 4 comprises the following mechanism. That is, a signal obtained after tracking error signal TE from RF amplifier 120 is processed by tracking servo control circuit 122 is filtered by LPF 124, and the filtered signal is converted into a digital signal by ADC 130A. The digital signal is then supplied to a decentering correction processor in decentering/surface run-out correction circuit 130. Furthermore, a signal obtained after focus error signal FE from RF amplifier 120 is processed by focus servo control circuit 126 is filtered by LPF 128, and the filtered signal is converted into a digital signal by ADC 130A. The digital signal is then supplied to a surface run-out correction processor in decentering/surface run-out correction circuit 130.

Memory address control circuit 130C in decentering/surface run-out correction circuit 130 receives the trace state of disc 1 from rotary encoder 14 in real time. Hence, circuit 130 can detect intermittent (muted) data portion shown in FIG. 2(b) in the label position portion. Circuit 130 inputs a tracking error correction signal (S1)/focus error correction signal (S2) in an immediately preceding non-intermittent portion to a tracking servo loop/focus servo loop in the detected intermittent portion of the label position (this process can also be implemented by arranging a hold circuit of correction signals S1/S2 in circuit 130). In this way, focus servo and tracking servo errors (or unstable servo control) in the label position portion can be prevented.

### (Supplementary Explanation of Apparatus Arrangement of FIG. 4)

FIG. 4 shows an apparatus (a disc drive or a personal computer or optical disc recorder which incorporates this drive) that records digital contents and a label by applying an interleave process for error correction to them using optical disc 1 which has a recordable/reproducible information recording surface formed of a concentric or spiral recording track. This apparatus comprises spindle motor 12 which rotates optical disc 1, laser pickup 10 which performs recording on optical disc 1 rotated by this spindle motor 12 using a laser beam and detects a laser beam reflected by optical disc 1, an arrangement (100, 102) which determines a label position where the label is recorded, and an arrangement (104, 108) which drives laser pickup 10 to record the digital contents information at a position other than the label position on the information recording surface of optical disc 1. Furthermore, this apparatus comprises an arrangement (110, 106) which records the label information at the label position on the information recording surface of optical disc 1 by modulating it within the error-correctable range so that its visual pattern is different from that at a position other than the label position, and also records the digital contents information in this label position together.

The apparatus shown in FIG. 4 can comprise an arrangement (110, 106) which records the label information in a specific recording track in the label position, and records the digital contents information in a track that neighbors the specific recording track, so that the label information and digital contents information are recorded together in the label position.

Furthermore, the apparatus shown in FIG. 4 can comprise an arrangement (110, 106) which records the label information in a specific sector in the label position, and records the digital contents information in a sector that neighbors the specific sector, so that the label information and digital contents information are recorded together in the label position.

### (Summary of Embodiment)

In a recordable/reproducible optical disc, recording information and label information are simultaneously recorded, so that an illustration and character of a label are visually confirmed while preventing a decrease in information recording capacity.

Upon information recording, a recording signal is further modulated (by chopping at a duty ratio of 50%) in a label information portion to record a label pattern so as to be visually recognized. In this case, the label information portion has a period that can sufficiently correct data omission (e.g., modulation 1/2 or less the interleave length is applied to minimize the influence on correction). The label picture/character pattern can be visual information by burst-like omission/non-omission recording regions.

Note that the present invention is not limited to the aforementioned embodiments, and various modifications may be made without departing from the scope of the invention when it is practiced.

For example, the present invention can be practiced for an optical disc of a double-sided/one recording layer type. Furthermore, the present invention can be practiced for a recordable/reproducible optical disc of a single-sided/multi-recording layer (or double-sided/multi-recording layer) type, which is expected to be put into practical use in the near future. The disc drive apparatus can be used in a personal computer or an optical disc recorder of a DVD-VR or the like. Also, the present invention can be practiced for a CD-R/CD-RW, and a Hi-vision optical disc recorder using a blue laser in addition to DVD.

The respective embodiments may be combined as needed to form various inventions. For example, some required constituent elements may be deleted from all the required constituent elements disclosed in the embodiments. Furthermore, the required constituent elements according to different embodiments may be combined.

## Claims

1. A method for recording digital contents and a label on a recordable/reproducible information recording surface of an optical disc, **characterized by** comprising:
determining a label position where the label is to be recorded (step ST12);
recording information of the digital contents at a position other than the label position on the information recording surface of the optical disc (step ST16); and
recording information of the label at the label position on the information recording surface of the optical disc by modulating the information of the label within an error-correctable range, such that a visual pattern of the label becomes different from a pattern at the position other than the label position (ST22).

2. A method according to claim 1, **characterized in that** the information of the label is recorded in a specific recording track in the label position on the information recording surface of the optical disc, and the information of the digital contents is recorded in a track that neighbors the specific recording track.

3. A method according to claim 1, **characterized in that** the information of the label is recorded in a specific sector in the label position on the information recording surface of the optical disc, and the information of the digital contents is recorded in a sector that neighbors the specific sector.

4. A method according to any one of claims 1 to 3, **characterized in that** a width of the label information at the label position becomes not more than half an interleave length thereof.

5. A method according to any one of claims 1 to 3, **characterized in that** the label information at the label position is modulated such that a duty ratio of a recording waveform becomes around 50%.

6. A method according to any one of claims 1 to 3, **characterized in that** the label information at the label position is modulated such that a signal level of a recording waveform becomes lower than a signal level other than the label position.

7. A method according to any one of claims 1 to 3, **characterized in that** the label information and the digital contents information are recorded together in the information recording surface.

8. A recording apparatus for recording digital contents and a label on a recordable/reproducible information recording surface of an optical disc, **characterized by** comprising:
a spindle motor (12) for rotating the optical disc;
a laser pickup (10) for performing recording using a laser beam on the optical disc rotated by the spindle motor, and detecting the laser beam reflected by the optical disc;
label position determination means (100, 1.02) for determining a label position where the label is to be recorded on the information recording surface;
drive means (104, 108) for driving the laser pickup to record information of the digital contents at a position other than the label position on the information recording surface of the optical disc; and
recording means (110, 106) for recording information of the label at the label position on the information recording surface of the optical disc by modulating the information of the label within an error-correctable range, such that a visual pattern of the label becomes different from a pattern at the position other than the label position.

9. An apparatus according to claim 8, **characterized in that** the recording means records the information of the label in a specific recording track in the label position on the information recording surface of the optical disc, and records the information of the digital contents in a track that neighbors the specific recording track.

10. An apparatus according to claim 8, **characterized in that** the recording means records the information of the label in a specific sector in the label position on the information recording surface of the optical disc, and records the information of the digital contents in a sector that neighbors the specific sector.

11. An apparatus according to any one of claims 8 to 10, **characterized in that** a width of the label information at the label position becomes not more than half an interleave length thereof.

12. An apparatus according to any one of claims 8 to 10, **characterized in that** the label information at the label position is modulated such that a duty ratio of a recording waveform becomes around 50%.

13. An apparatus according to any one of claims 8 to 10, **characterized in that** the label information at the label position is modulated such that a signal level of a recording waveform becomes lower than a signal level other than the label position.

14. An apparatus according to any one of claims 8 to 10, **characterized in that** the label information and the digital contents information are recorded together in the information recording surface.
